Europäisches Patentamt

European Patent Office

Office européen des brevets

(19)

(11) Numéro de publication: **0 187 093**

**A1**

(12) **DEMANDE DE BREVET EUROPEEN**

(21) Numéro de dépôt: **85402488.2**

(22) Date de dépôt: **13.12.85**

(51) Int. Cl.⁴: **G01W 1/14**

(30) Priorité: **21.12.84 FR 8419698**

(43) Date de publication de la demande:
**09.07.86 Bulletin 86/28**

(84) Etats contractants désignés:
**BE DE GB NL**

(71) Demandeur: **ELECTRICITE DE FRANCE Service National**
**2, rue Louis Murat**
**F-75008 Paris(FR)**

(72) Inventeur: **Masniere, Pierre**
**10, Avenue de Verdun**
**F-92270 Bois Colombes(FR)**
Inventeur: **Ducourroy, André**
**47, rue de la Plaine**
**F-78290 Croissy Sur Seine(FR)**

(74) Mandataire: **Mongrédien, André et al**
**c/o BREVATOME 25, rue de Ponthieu**
**F-75008 Paris(FR)**

(54) **Pluviomètre automatique.**

(57) Pluviomètre automatique comportant un premier récepteur (2) destiné à recevoir les retombées sèches ; un second récepteur (6) destiné à recevoir les retombées humides, muni d'un premier capteur (16) apte à émettre un signal lorsqu'un échantillon de retombées humides d'un certain volume est recueilli ; un dispositif obturateur 18 permettant la fermeture alternative des deux récepteurs (2, 6) en fonction d'un signal émis par un détecteur de précipitation (20), un dispositif de mesure (30) disposé à la sortie du second récepteur (6) et servant à effectuer des mesures de grandeurs physico-chimiques sur l'échantillon ; un dispositif d'échantillonnage (60) disposé à une sortie du dispositif de mesure (30) servant à ranger et conserver à une température inférieure à 0°C une fraction de chaque échantillon recueilli ; un système de contrôle (90) servant à commander automatiquement les éléments précités en fonction des signaux émis par des capteurs dont ledit premier capteur (16) et ledit détecteur (20) et à gérer les mesures effectuées sur l'échantillon.

Pluviomètre automatique

La présente invention a pour objet un pluviomètre automatique. Il est destiné plus particulièrement à l'acquisition de mesures physico-chimiques et à la conservation d'échantillons de retombées humides. Sa conception répond aux contraintes d'expérimentation rencontrées sur un site isolé (éloignement des laboratoires d'analyses, suivi épisodique de la marche de l'appareil, ...).

La chimie des précipitations atmosphériques et particulièrement le problème des "pluies acides" demandent aujourd'hui une étude poussée des précipitations observées. On essaie de mieux cerner l'évolution de divers paramètres tels que le pH, la conductivité, la température, les teneurs en diverses espèces chimiques durant ces précipitations, et de relier les résultats acquis aux types de situations météorologiques, mais aussi à l'évolution des teneurs en gaz et particules dans l'atmosphère et au transport à longue distance de certains polluants atmosphériques.

Ces études demandent donc un pluviomètre automatisé capable d'effectuer des mesures physicochimiques sur un grand nombre de séquences successives de pluies et de conserver à une température inférieureà 0°C, durant une période relativement longue (plusieurs semaines) des échantillons de retombées humides d'un volume déterminé, pour une analyse chimique ultérieure. De plus, il est nécessaire que les mesures effectuées par exemple lors de la mesure du pH n'affectent pas la composition chimique des échantillons destinés à être conservés. Le pluviomètre doit de plus être capable de séparer les retombées humides des retombées sèches.

L'invention a justement pour objet un pluviomètre automatique répondant aux caractéristiques décrites précédemment.

De façon plus précise, l'invention a pour objet un pluviomètre automatique comportant :

- un premier récepteur destiné à recevoir les retombées sèches ;

- un second récepteur destiné à recevoir les retombées humides et muni d'un premier capteur apte à émettre un signal lorsqu'un échantillon de retombées humides d'un certain volume est recueilli ; ce deuxième récepteur étant susceptible d'être doté d'un système de chauffage ;

- un dispositif obturateur permettant la fermeture alternative des deux récepteurs en fonction d'un signal émis par un détecteur de précipitation ;

- un dispositif de mesure disposé à la sortie du second récepteur et servant à effectuer des mesures de grandeurs physico-chimiques sur l'échantillon ;

- un dispositif d'échantillonnage disposé à une sortie du dispositif de mesure servant à ranger et conserver à une température inférieure à 0°C une fraction de chaque échantillon recueilli ;

- un système de contrôle servant à commander automatiquement les éléments précités en fonction des signaux émis par des capteurs incluant ledit premier capteur et ledit détecteur de précipitation et à gérer les mesures effectuées sur l'échantillon en les datant.

Selon un mode préféré de réalisation de l'invention, ledit dispositif de mesure comporte :

- une vanne d'entrée disposée à la sortie du second récepteur ;

- une vanne de sortie principale communiquant avec la vanne d'entrée par un tube principal pourvu d'une sonde de mesure de la température et d'une sonde de mesure de la conductivité, ladite vanne de sortie principale étant reliée au dispositif d'échantillonnage ;

- une vanne de sortie secondaire communiquant avec le tube principal par un tube secondaire muni d'un trop-plein et branché sur le tube principal au-dessus desdites sondes, ladite vanne de sortie secondaire étant reliée à un canal d'évacuation, ledit tube secondaire étant pourvu d'une sonde de mesure du pH.

De façon avantageuse, le dispositif d'échantillonnage comporte :

- un caisson dans lequel sont disposées des éprouvettes destinées à recevoir des échantillons ;

- un mécanisme distributeur permettant de déplacer successivement au-dessus de chaque éprouvette une tête d'injection communiquant avec le dispositif de mesure et servant à injecter par un bec verseur un échantillon dans chaque éprouvette.

Avantageusement, les éprouvettes sont munies d'un obturateur constitué d'une feuille de tétrafluoréthylène fendue en croix, permettant la pénétration du bec verseur, et le caisson du dispositif d'échantillonnage est pourvu d'un système de réfrigération permettant d'obtenir des températures inférieures à 0°C.

De façon avantageuse, un dispositif de rinçage est disposé dans le second récepteur et comprend des moyens pour remplir celui-ci de liquide de rinçage, un second capteur émettant un signal lorsqu'un certain volume de liquide de rinçage a rempli le second récepteur.

Selon un mode préféré de réalisation, l'ensemble du circuit emprunté par les échantillons de retombées humides est recouvert de tétrafluoréthylène.

D'autres avantages et caractéristiques seront exposés de façon plus précise dans la description qui suit, donnée à titre explicatif mais nullement limitatif, en référence à la figure unique annexée, qui représente un schéma d'ensemble d'un mode préféré de réalisation de l'invention.

Le pluviomètre automatique selon l'invention représenté sur la figure comporte quatre parties principales :

- un dispositif 2, 6, 18 de prélèvement d'échantillons de retombées humides et de retombées sèches ;

- un dispositif 30 de mesure de grandeurs physico-chimiques sur chaque échantillon, ici la température, la conductivité et le pH ;

- un dispositif d'échantillonnage 60 permettant de ranger, classer et conserver une fraction de chaque échantillon recueilli pour des analyses chimiques ultérieures ;

- un système de contrôle 90 permettant l'automatisation du processus de prélèvement, de mesure et d'échantillonnage.

Le dispositif de prélèvement d'échantillons comporte tout d'abord un premier récepteur 2 destiné à recueillir des retombées sèches. Ce récepteur 2 possède un cône ou trémie de réception 3 dont le fond, doté d'un dispositif retenant les corps étrangers (insectes, grosses particules,...), communique avec un conteneur 4. Les retombées sèches recueillies par le récepteur 2 s'accumulent dans le conteneur 4 pour être analysées ultérieurement.

Le dispositif de prélèvement d'échantillons comporte également un second récepteur 6 destiné à recueillir des retombées humides. Ce récepteur 6 possède un cône ou trémie de réception 5 dont le fond, doté d'un dispositif retenant les corps étrangers, communique avec un conteneur 8 par le moyen d'un tube central 10. Le conteneur 8 comporte une cuve annulaire 12 communiquant avec le tube central 10 et un flotteur 14 annulaire coulissant dans ladite cuve 12. Un premier capteur ou détecteur de proximité 16 est disposé à une certaine hauteur de la cuve 12.

Lorsque le cône de réception 5 reçoit des retombées humides, elles descendent dans le tube central 10 et commencent à remplir la cuve 12, le flottteur 14 montant ainsi dans cette cuve 12 jusqu'au moment où un certain volume désiré de retombées humides est recueilli correspondant à la position du flotteur 14 en regard du capteur 16. Le capteur 16 émet alors un signal correspondant à la fin du prélèvement d'un échantillon de retombées humides d'un certain volume, par exemple 40 ml.

Le second récepteur 6 comporte également un dispositif de rinçage 13 comportant des moyens, par exemple un réservoir de liquide de rinçage et une pompe, permettant de remplir la cavité annulaire 12 par un tube 15 relié au tube central 10. Un second capteur 17 ou détecteur de proximité, disposé au-dessus du premier capteur 16, émet un signal lorsqu'un certain volume de liquide de rinçage (par exemple le double du volume d'un échantillon, soit 80 ml) a rempli la cuve 12 et donc amené le flotteur 14 à hauteur dudit capteur 17.

Un dispositif obturateur 18 permet la fermeture alternative de l'un des deux récepteurs 2 et 6 en fonction d'un signal émis par un détecteur de précipitation 20. Le dispositif obturateur 18 comporte un couvercle 22 s'adaptant sur les entrées des deux récepteurs 2 et 6 et tournant autour d'un axe vertical situé à mi-chemin entre les deux récepteurs. Le couvercle peut avoir deux positions par rotation à 180°.

Dans la première position (en trait plein sur la figure), l'entrée du second récepteur 6 est fermée alors que l'entrée du premier récepteur 2 communique avec l'extérieur à travers une ouverture 24. Dans la seconde position (en traits mixtes sur la figure), l'entrée du premier récepteur 2 est fermée alors que l'entrée du second récepteur 6 communique avec l'extérieur.

Un vérin 26 assure le levage du couvercle 22 et sa mise en rotation est actionnée par un moteur 27, permettant ainsi une fermeture alternative de l'un ou l'autre récepteur. On recueille alors soit des retombées sèches dans le premier récepteur 2, soit des retombées humides dans le second récepteur 6. Des détecteurs de position 28a, 28b, 28c émettent des signaux correspondant aux positions qu'occupe successivement le couvercle 22.

Un dispositif de mesure est disposé à la sortie du second récepteur 6. Il comporte tout d'abord une vanne d'entrée 32 disposée à la sortie du second récepteur 6 et une vanne de sortie principale 34 située en-dessous de ladite vanne d'entrée 32 et communiquant avec celle-ci par un tube principal 36 vertical. Ce tube 36 est pourvu d'une sonde de mesure de la température 38 et d'une sonde de mesure de la conductivité 40 disposées à une certaine hauteur de ce tube principal 36.

La vanne de sortie principale 34 est reliée à une chambre d'entrée 42 du dispositif d'échantillonnage 60 décrit ultérieurement.

Un tube secondaire 44 vertical communique avec le tube principal 36 par un canal incliné 46 greffé sur ce tube principal 36 au-dessus desdites sondes 38 et 40. Ce canal 46 fait office de "trop-plein" pour le tube principal 36, permettant ainsi à une fraction de l'échantillon de remplir le tube secondaire 44 pourvu d'une sonde de mesure du pH 48. Une vanne de sortie secondaire 50 est placée à la sortie inférieure du tube secondaire 44 et relie celui-ci à un canal d'évacuation 52. Un tuyau d'évacuation 54 est greffé à une certaine hauteur du tube secondaire 44, faisant ainsi office de "trop-plein" pour celui-ci.

Cette disposition permet donc de fractionner en deux parties l'échantillon de retombées humides recueilli. La première partie (représentant par exemple les trois-quarts de l'échantillon) remplit le tube principal 36 jusqu'au niveau du canal 46 et fait l'objet de mesures de température et de conductivité par les sondes 38 et 40. Ces mesures n'affectent pas la composition chimique des retombées humides et cette partie de l'échantillon est donc destinée à être conservée dans le dispositif d'échantillonnage 60. La seconde partie (représentant par exemple un quart de l'échantillon) remplit le tube secondaire jusqu'au niveau du tuyau d'évacuation 54 et fait l'objet d'une mesure du pH par la sonde 48. Cette mesure peut affecter la composition chimique des retombées humides, c'est pourquoi cette seconde partie de l'échantillon est destinée à être rejetée vers l'extérieur par le canal d'évacuation 52. On peut noter que la sonde de mesure du pH demande à être constamment humidifiée.

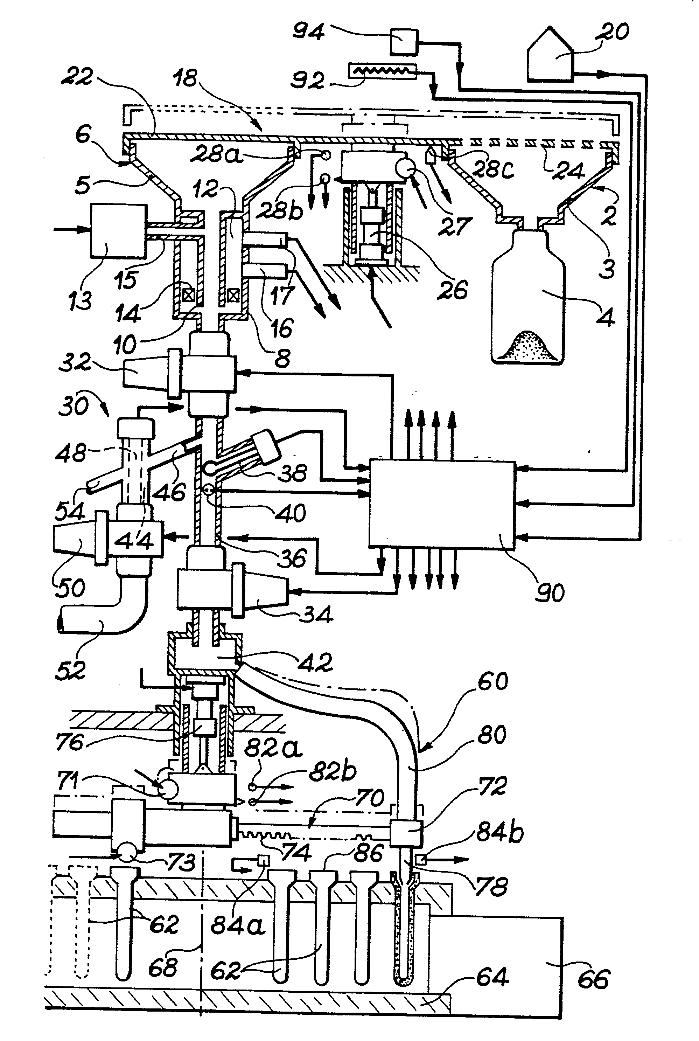

Le dispositif d'échantillonnage 60 est disposé à la sortie de la vanne de sortie principale 34 au travers d'une chambre d'entrée 42. Il sert à ranger, classer et conserver les fractions d'échantillon destinées à être analysées ultérieurement dans des éprouvettes 62 disposées dans un caisson 64 maintenu à une température donnée, par exemple inférieure à 0°C, par un système de refroidissement 66. Selon le mode préféré de réalisation de l'invention représenté sur la figure 1, le caisson 64 est cylindrique d'axe central vertical 68. Les éprouvettes 62 sont disposées régulièrement suivant des cercles concentriques à cet axe 68.

Un mécanisme distributeur est disposé au-dessus du caisson 64. Il comporte un bras 70 pouvant tourner autour dudit axe 68 grâce à un moteur 71 permettant à une tête d'injection 72 de se déplacer au-dessus des éprouvettes 62 disposées sur un même cercle. Un moteur 73 actionne un pignon (non représenté) engrené sur une crémaillère 74 formée sur le bras 70, permettant ainsi la translation radiale de ce dernier, la tête d'injection 72 se déplaçant ainsi au-dessus des éprouvettes 62 d'un cercle aux éprouvettes 62 d'un autre cercle. Le mécanisme distributeur comporte également un vérin 76 assurant la translation verticale du bras 70.

La tête d'injection 72 communique avec la chambre d'entrée 42 du dispositif d'échantillonnage 60 et donc avec ladite vanne de sortie principale 34 par un tuyau souple 80. Cette tête d'injection 72 est pourvue d'un bec verseur 78 effilé pénétrant dans les éprouvettes lorsque le vérin 76 actionne le bras 70 vers le bas. La première partie de l'échantillon transitant par le tube principal 36 s'écoule donc par le tuyau souple 80 vers la tête d'injection 72 puis par le bec verseur 78 dans l'éprouvette 62 située au-dessous de ladite tête d'injection.

Des détecteurs de position 82a, 82b, 84a, 84b émettent des signaux lors du déplacement en translations verticale et radiale du bras 70. Ils ne sont représentés qu'à titre indicatif et leur nombre n'est pas limitatif. Par exemple, des détecteurs de position en rotation du bras 70 ne sont pas représentés.

Le dispositif d'échantillonnage permet donc de remplir des éprouvettes d'une partie de l'échantillon de retombées humides recueilli ; un système de contrôle 90 décrit ci-après permet d'actionner le mecanisme distributeur afin de remplir les éprouvettes et de les classer suivant un ordre chronologique. Le nombre d'éprouvettes est variable, par exemple de l'ordre de 250. Suivant la cadence des retombées humides échantillonnées, on a une autonomie de l'ordre de plusieurs semaines pendant lesquelles les échantillons sont prélevés, analysés, puis conservés pour des analyses chimiques ultérieures approfondies. Le nombre d'éprouvettes est déterminé suivant les études météorologiques envisagées et les climats examinés. La disposition décrite des éprouvettes n'est donnée qu'à titre d'exemple.

Avantageusement, les éprouvettes 62 sont munies chacune d'un obturateur 86 constitué d'une feuille, en tétrafluoréthylène par exemple, fendue en croix. Lorsque la tête d'injection 72 se déplace vers le bas, son bec verseur 78 ouvre cette feuille, permettant l'injection de l'échantillon dans l'éprouvette 62 correspondante. Lorsque la tête d'injection 72 remonte, ladite feuille se referme, obturant ainsi efficacement les éprouvettes. La stabilité de la conservation des échantillons est ainsi assurée.

Selon le mode préféré de réalisation du pluviomètre automatique, l'ensemble du circuit emprunté par les échantillons de retombées humides est recouvert de tétrafluoréthylène. Seules les éprouvettes 62 sont par exemple des tubes de verre pour une meilleure conservation des échantillons avant analyse chimique.

Le pluviomètre automatique selon l'invention comporte également un système de contrôle 90 servant à commander l'ensemble des dispositifs décrits précédemment.Il comprend par exemple un automate programmable qui reçoit des signaux par différents capteurs et commande les vannes, les vérins et autres dispositifs d'actionnement. Dans le mode de réalisation représenté, le système de contrôle 90 reçoit des signaux du détecteur de précipitation 20, du premier capteur 16, du second capteur 17, de tous les capteurs de position 28a, 28b, 28c, 82a, 82b, 84a, 84b, et de capteurs non représentés et dont le nombre n'est pas limitatif. Il actionne le dispositif obturateur 18 par l'intermédiaire du vérin 26 et du moteur 27, les trois vannes 32, 34 et 50, le mécanisme distributeur par les moteurs 71, 73 et le vérin 76 et la pompe du dispositif de rinçage 13. De même, le nombre d'éléments actionnés n'est pas limitatif.

Le système de contrôle 90 comprend par exemple une horloge et un système d'acquisition de données (imprimante, support magnétique) susceptibles de télétransmission. Les informations telles que la date, l'heure, les mesures de la température, de la conductivité et du pH données par les capteurs 38, 40 et 48 respectivement, la température extérieure et la pression atmosphérique données par les capteurs 92 et 94 sont inscrites pour chaque échantillon, certaines mesures comme la température, la conductivité et le pH pouvant être réalisées plusieurs fois pour chacun des échantillons. On peut noter également la place des éprouvettes dans le caisson correspondant aux échantillons. Le nombre d'informations écrites ou transmises n'est évidemment pas limitatif. Compte tenu des séquences de fonctionnement à automatiser, la conception d'un tel système de contrôle 90 est à la portée de l'homme de l'art.

Le premier et le second récepteurs 2,6 peuvent posséder des cônes présentant des sections différentes (par exemple 0,039 m² ou 0,38 m²). A volume prélevé identique, les durées de prélèvement varient en fonction de la section d'entrée des récepteurs. Il en est de même pour le détecteur de précipitations 20. L'échelle de sensibilité de ce dernier est modulable par le biais d'un chauffage variable, suivant le choix des précipitations retenues (de faibles précipitations pouvant alors être prises en compte) ; deux sections de 12 et 100 cm² sont par ailleurs envisagées.

On décrit maintenant le processus de fonctionnement du pluviomètre automatique selon l'invention dont un mode préféré de réalisation vient d'être décrit en se référant à la figure 1.

Le processus de fonctionnement comporte tout d'abord une première séquence se déroulant de la manière suivante :

- la tête d'injection 72 se déplace pour se trouver en position haute au-dessus d'une éprouvette 62 vide. Le dispositif obturateur 18 ferme le second récepteur 6, le premier récepteur 2 étant ouvert ;

- lorsque les retombées humides deviennent suffisantes, le détecteur de précipitations 20 émet un signal. Le système de contrôle 90 commande alors le dispositif obturateur 18 de manière à ce que le second récepteur 6 soit ouvert. Les retombées humides s'accumulent dans la cuve 12 en passant par le tube central jusqu'à ce que le premier capteur 16 émette un signal correspondant à un volume recueilli de par exemple 40 ml ;

- au moment où le premier capteur 16 émet son signal, la vanne de sortie secondaire 50 est actionnée dans le sens de l'ouverture pendant deux secondes évacuant le liquide contenu dans le tube secondaire 44 par le canal d'évacuation 52 ;

- après ces deux secondes, la vanne d'entrée 32 est actionnée dans le sens de l'ouverture pendant un temps suffisant pour l'écoulement de l'échantillon (par exemple quatre secondes), après quoi elle se referme. Les 40 ml de l'échantillon se fractionnent en deux parties par le "trop-plein" 46. 30 ml remplissent le tube principal 36 où sont effectuées les mesures de température et de conductivité et 10 ml remplissent le tube secondaire 44 où sont effectuées les mesures de pH. La sonde de mesure du pH 48 est donc constamment humidifiée. Pendant trente secondes par exemple, cinq séries de mesures sont effectuées et enregistrées par le système de contrôle 90 qui imprime sur papier ou transmet ces informations avec la date, l'heure, la température extérieure, la pression atmosphérique et autres renseignements utiles ;

- le mécanisme distributeur est actionné de telle façon que le bras 70 se déplace vers le bas. Le bec verseur 78 plonge dans l'éprouvette 62 située en-dessous à travers l'obturateur 86 ;

- la vanne de sortie principale 34 est actionnée dans le sens de l'ouverture pendant trois secondes. Les 30 ml

s'écoulent par l'entrée 42, le tuyau 80, la tête d'injection 72 et le bec verseur 78 dans l'éprouvette 62 correspondante.

Les séquences suivantes jusqu'à l'avant-dernière se déroulent de la manière suivante :

- l'éprouvette 62 précédente étant remplie, le mécanisme distributeur déplace la tête d'injection 72 au-dessus d'une nouvelle éprouvette 62 vide. Quand le premier capteur 16 émet son signal correspondant à 40 ml de retombées humides recueillies, le processus se déroule lors de la première séquence.

Ces séquences successives se déroulent jusqu'à ce que le détecteur de précipitation ne reçoive plus suffisamment de retombées humides et n'émette plus de signaux pendant trois minutes par exemple. Le dispositif obturateur 18 est commandé de manière à ce que le second récepteur 6 soit fermé et le premier récepteur 2 ouvert.

- le volume présent à ce moment là est évacué dans le dispositif de mesure par l'ouverture de la vanne d'entrée 32. Des séries de mesures sont effectuées mais ne sont pas toujours significatives, le volume recueilli étant variable. Le volume est ensuite évacué dans une éprouvette 62 correspondante par l'ouverture de la vanne de sortie principale 34 et en suivant le circuit du dispositif d'échantillonnage.

La séquence de rinçage est alors commandée par le système de contrôle 90 et se déroule comme suit :

- la tête d'injection 72 est positionnée au-dessus d'une nouvelle éprouvette vide,

- de l'eau désionisée est acheminée par le dispositif de rinçage 13 dans le tube central 10 afin de remplir la cuve 12 du second récepteur 6. Le dispositif de rinçage 13 stoppe son action lorsque le second capteur 17 émet un signal correspondant à un volume d'environ 80 ml d'eau accumulé,

- la vanne de sortie secondaire 50 est actionnée dans le sens de l'ouverture durant deux secondes évacuant le liquide contenu dans le tube secondaire 44 par le canal d'évacuation 52,

- à ce moment, la vanne d'entrée 32 est actionnée dans le sens de l'ouverture. L'eau désionisée remplit le tube principal 36 jusqu'au niveau du "trop-plein" 46, puis remplit le tube secondaire 44 jusqu'au niveau du "trop-plein" 54. La sonde de mesure du pH est donc toujours humidifiée. Le reste d'eau désionisée est évacué par le tube d'évacuation 54. Le pluviomètre est alors prêt pour une nouvelle séquence commandée par le signal émis par le détecteur de précipitations 20. La vanne de sortie principale 34 est alors actionnée dans le sens de l'ouverture pour évacuer le liquide de rinçage contenu dans le tube principal 36 par le circuit du dispositif d'échantillonnage 60 jusque dans une éprouvette 62 correspondante.

A chaque rinçage du circuit, une éprouvette 62 se trouve donc remplie de liquide de rinçage et n'est donc pas utilisée pour une analyse chimique ultérieure.

On peut envisager qu'à chaque séquence de rinçage, le mécanisme d'échantillonnage déplace la tête d'injection 72 au-dessus d'un canal d'évacuation où le liquide de rinçage est expulsé lors de la première séquence. Ensuite, la tête d'injection 72 se place au-dessus d'une éprouvette 62 vide correspondante. Ceci permet d'utiliser les éprouvettes uniquement pour les échantillons de retombées humides.

**Revendications**

1. Pluviomètre automatique, caractérisé en ce qu'il comporte :

- un premier récepteur (2) destiné à recevoir les retombées sèches,

- un second récepteur (6) destiné à recevoir les retombées humides, muni d'un premier capteur (16) apte à émettre un signal lorsqu'un échantillon de retombées humides d'un certain volume est recueilli,

- un dispositif obturateur (18) permettant la fermeture alternative des deux récepteurs (2, 6) en fonction d'un signal émis par un détecteur de précipitation (20),

- un dispositif de mesure (30) disposé à la sortie du second récepteur (6) et servant à effectuer des mesures de grandeurs physico-chimiques sur l'échantillon,

- un dispositif d'échantillonnage (60) disposé à une sortie du dispositif de mesure (30) servant à ranger et conserver à une température inférieure à 0°C une fraction de chaque échantillon recueilli,

- un système de contrôle (90) servant à commander automatiquement les élément précités en fonction des signaux émis par des capteurs incluant ledit premier capteur (16) et ledit détecteur de précipitation (20) et à gérer les mesures effectuées sur l'échantillon.

2. Pluviomètre automatique selon la revendication 1, caractérisé en ce que le dispositif de mesure (30) comporte :

- une vanne d'entrée (32) disposée à la sortie du second récepteur (6),

- une vanne de sortie principale (34) communiquant avec la vanne d'entrée (32) par un tube principal (36) pourvu d'une sonde de mesure de la température (38) et d'une sonde de mesure de la conductivité (40), ladite vanne de sortie principale (34) étant reliée au dispositif d'échantillonnage (60),

- une vanne de sortie secondaire (50) communiquant avec le tube principal (36) par un tube secondaire (44) muni d'un trop-plein (54) et branché sur le tube principal (36) au-dessus desdites sondes (38, 40), ladite vanne de sortie secondaire (50) étant reliée à un canal d'évacuation (52), ledit tube secondaire (44) étant pourvu d'une sonde de mesure du pH (48).

3. Pluviomètre automatique selon l'une quelconque des revendications 1 et 2, caractérisé en ce que le dispositif d'échantillonnage (60) comporte :

- un caisson (64) dans lequel sont disposées des éprouvettes (62) destinées à recevoir des échantillons,

- un mécanisme distributeur permettant de placer successivement au-dessus de chaque éprouvette (62) une tête d'injection (72) communiquant avec le dispositif de mesure (30) par ladite vanne de sortie principale (34) et servant à injecter par un bec verseur (78) des échantillons dans chaque éprouvette.

4. Pluviomètre automatique selon la revendication 3, caractérisé en ce que les éprouvettes (62) sont munies d'un obturateur (86) constitué d'une feuille de tétrafluoréthylène fendue en croix, permettant la pénétration du bec verseur (78).

5. Pluviomètre automatique selon l'une quelconque des revendications 3 et 4, caractérisé en ce que le caisson (64) du dispositif d'échantillonnage (60) est pourvu d'un système de réfrigération (66).

6. Pluviomètre automatique selon l'une quelconque des revendications 1 à 5, caractérisé en ce que le second récepteur (6) est pourvu d'un dispositif de rinçage (13) comprenant des moyens pour remplir ce second récepteur (6) de liquide de rinçage, et un second capteur (17) émettant un signal lorsqu'un certain volume de liquide de rinçage a rempli le second récepteur (6).

7. Pluviomètre automatique selon l'une quelconque des revendications 1 à 6, caractérisé en ce que les retombées humides passent par un circuit recouvert de tétrafluoréthylène.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | REVIEW OF SCIENTIFIC INSTRUMENTS, vol. 45, no. 12, décembre 1974, pages 1517-1519, American Institute of Physics, New York, US; J. GRAY: "An automatic sequential rainfall sampler" * Pages 1517-1519 * | 1,3,7 | G 01 W 1/14 |
| X | US-A-4 140 011 (S.V. KRUPA et al.) * Titre; figures 1A,1B,2-5,9-11; colonne 4, ligne 4 - colonne 5, ligne 40; colonne 6, ligne 35 - colonne 8, ligne 17 * | 1,3,7 | |
| A | US-A-3 598 161 (W.C. BALDWIN) * Titre; figures 1,2; colonne 1, ligne 31 - colonne 2, ligne 6 * | 1,3-5 | |
| A | US-A-4 335 620 (W.J. ADAMS) * Titre; figures 1-4; colonne 3, ligne 34 - colonne 8, ligne 56 * | 1-3,5, 6 | |
| A | DE-A-1 573 372 (O. VAISALA) * Figures; page 2, paragraphe 3 - page 4, paragraphe 1 * | 2 | |

**DOMAINES TECHNIQUES RECHERCHES (Int. Cl.4)**

G 01 W
G 01 N
B 01 L

Le présent rapport de recherche a été établi pour toutes les revendications

| Lieu de la recherche | Date d'achèvement de la recherche | Examinateur |
|---|---|---|
| LA HAYE | 18-03-1986 | VISSER F.P.C. |